**Europäisches Patentamt**

**European Patent Office**

**Office européen des brevets**

(19)

(11) Veröffentlichungsnummer : **0 255 520**
**B1**

(12) **EUROPÄISCHE PATENTSCHRIFT**

(45) Veröffentlichungstag der Patentschrift :
**11.01.89**

(51) Int. Cl.⁴ : **F 16 H 57/02, B 60 K 5/04**

(21) Anmeldenummer : **86903332.4**

(22) Anmeldetag : **16.05.86**

(86) Internationale Anmeldenummer :
**PCT/EP 86/00292**

(87) Internationale Veröffentlichungsnummer :
**WO/8607425 (18.12.86 Gazette 86/27)**

(54) **GETRIEBE FÜR EIN KRAFTFAHRZEUG.**

(30) Priorität : **15.06.85 PCT/EP85/00292**

(43) Veröffentlichungstag der Anmeldung :
**10.02.88 Patentblatt 88/06**

(45) Bekanntmachung des Hinweises auf die Patenterteilung : **11.01.89 Patentblatt 89/02**

(84) Benannte Vertragsstaaten :
**DE FR GB IT NL SE**

(56) Entgegenhaltungen :
**EP--A-- 0 080 082**
**BG--A-- 2 035 930**
**DE--A-- 2 919 405**
**GB--A-- 2 076 083**
**GB--A-- 2 133 845**
**US--A-- 4 468 982**

(73) Patentinhaber : **ZAHNRADFABRIK FRIEDRICHSHA-
FEN AKTIENGESELLSCHAFT**
**Löwentaler Strasse 100 Postfach 2520**
**D-7990 Friedrichshafen 1 (DE)**

(72) Erfinder : **BUCKSCH, Manfred**
**Pralot Lutz Strasse 24**
**D-7990 Friedrichshafen (DE)**

(74) Vertreter : **Raue, Reimund**
**Zahnradfabrik Friedrichshafen AG Löwentaler
Strasse 100 Postfach 2520**
**D-7990 Friedrichshafen 1 (DE)**

## Beschreibung

Diese Erfindung betrifft ein Getriebe für ein Kraftfahrzeug nach dem Oberbegriff von Anspruch 1.

Zur Gewinnung von möglichst großem Nutzraum bei kleinen Personenkraftfahrzeugen werden die Antriebsmotoren quer zur Fahrtrichtung angeordnet und in Verbindung mit einem Frontantrieb eingesetzt. Dabei ist der Antriebsmotor und ein an diesen angeflanschtes Mehrgang-Automatgetriebe, je nach dem zu übertragenden Drehmoment, mit drei oder maximal vier Gängen gerade noch unterzubringen.

Der Raum quer zur Fahrtrichtung ist dabei so ausgefüllt, daß bei vollem Lenkausschlag und aufgezogenen Schneeketten diese bereits am Getriebe anschlagen, so daß eine weitere Erhöhung der Gangzahl als nicht möglich erscheint.

Ein solches Getriebe ist sowohl aus der Firmenschrift F1/36 WH 816009 Seite 3 wie auch aus den Typenblättern F43/301/RT 3356-683 und F43/437 RT 3397-683 dargestellt und in ähnlicher Ausführung aus der DE-OS 29 19 167 und DE-OS 29 19 405 bekannt.

Aber auch für kleine Personenkraftwagen steht die Aufgabe, den Kraftstoffverbrauch durch bessere Anpassung des Antriebsstranges an das verbrauchsgünstige Kennfeld des Antriebsmotors zu senken.

Es ist deshalb Aufgabe der Erfindung, ein Getriebe für ein Kraftfahrzeug nach dem Oberbegriff von Anspruch 1 durch Erhöhung der Gangzahl weiterzuentwickeln mit dem Ziel, den Antriebsstrang besser an den Antriebsmotor anzupassen, ohne daß der zur Verfügung stehende Bauraum vergrößert werden muß. Dabei soll die Lösung mit einem relativ geringen Aufwand in der Entwicklung und der Fertigung erzielt werden.

Diese Aufgabe wird mit den kennzeichnenden Merkmalen von Anspruch 1 erfüllt.

Wird ein allgemein bekanntes und in bekannter Weise angeordnetes, selbsttätig schaltendes Gangwechselgetriebe um ein Teilgetriebe ergänzt, das zum Achsgetriebe koaxial angeordnet und mit diesem verbunden ist, kann mit relativ einfachen Mitteln wenigstens ein weiterer Gang gewonnen werden, weil an dem bisherigen Gangwechselgetriebe keine Veränderungen vorgenommen werden müssen. Der für das Teilgetriebe benötigte geringe Bauraum parallel zum Antriebsmotor ist an dieser Stelle vorhanden, so daß die bekannte Anordnung vom Antriebsmotor und Gangwechselgetriebe und sogar vom Achsgetriebe bestehenbleiben kann. Lediglich das Achsgetriebe ist an das neue Teilgetriebe anzupassen, was, gemessen am erzielten Erfolg, einen relativ geringen Aufwand erfordert.

Mit den Ansprüchen 2 bis 8 wird die Erfindung in vorteilhafter Weise ausgestaltet.

Wird als Teilgetriebe ein einfacher Planetenradsatz mit den zur Schaltbarkeit notwendigen Kupplungen, Bremsen und einem Freilauf eingesetzt und das Achsgetriebe als Planetendifferential ausgebildet, so ist die Verbindung dieser beiden Getriebe besonders einfach möglich, wobei, je nach der zu fertigenden Getriebestückzahl, das Getriebegehäuse angemessen angepaßt werden kann einmal mit einem völlig neuen Gehäuse oder auch durch Ergänzen des im Prinzip vorhandenen Gehäuses mit dem Gehäuse für das Achs- und Teilgetriebe.

Durch einfache, aber unterschiedliche getriebliche Bindungen zwischen dem Achs- und dem Teilgetriebe lassen sich in Verbindung mit einem bekannten Viergang-Getriebe in der bisher bekannten Anordnung sowohl ein Fünfgang-Getriebe mit einem wie auch mit zwei Schnellgängen erzielen. Dabei wird in das bekannte Viergang-Getriebe mit der Anordnung der Seitenwelle nicht eingegriffen, was von besonderem Vorteil ist.

Ein relativ kurz bauendes Getriebe ist aus der GB-A-2 076 083 bekannt. Durch die koaxiale Anordnung von einem Untersetzungsgetriebe und einem Schnellganggetriebe ist es möglich, daß sich die axialen Schubkräfte im Abtriebsrad zur Seitenwelle, das zwischen den beiden Getrieben angeordnet ist, aufheben. In dem zur Verfügung stehenden Bauraum sind aber nur maximal vier Vorwärtsgänge realisierbar.

Weiter ist aus der EP-A-80 082 bekannt über ein Teilgetriebe auf der zweiten Achse, also in Verbindung mit der Seitenwelle und den Stirnrädern, ein Vierganggetriebe zu realisieren. Die günstigere Baulänge bedingt aber einen relativ großen Abstand zwischen der zweiten und ersten Achse, was zu einer nicht vertretbaren Bauhöhe führt.

Weitere Einzelheiten der Erfindung werden anhand von Ausführungsbeispielen und Zeichnungen erläutert, wobei die Einzelheiten der Zeichnung Gegenstand der Erfindung sind.

Es zeigen:

Fig. 1 eine schematische Darstellung der Antriebsachse in Verbindung mit dem Antriebsmotor und dem Gangwechselgetriebe.

Fig. 2 einen Getriebeaufbau in schematischer Darstellung.

Fig. 3 ein Schema über gangabhängig geschaltete Kupplungen und Bremsen nach Fig. 2.

Fig. 4 einen Getriebeaufbau nach Fig. 2, jedoch in einer zweiten Ausführung.

Fig. 5 ein Schema nach Fig. 3, jedoch der Fig. 4 zugeordnet.

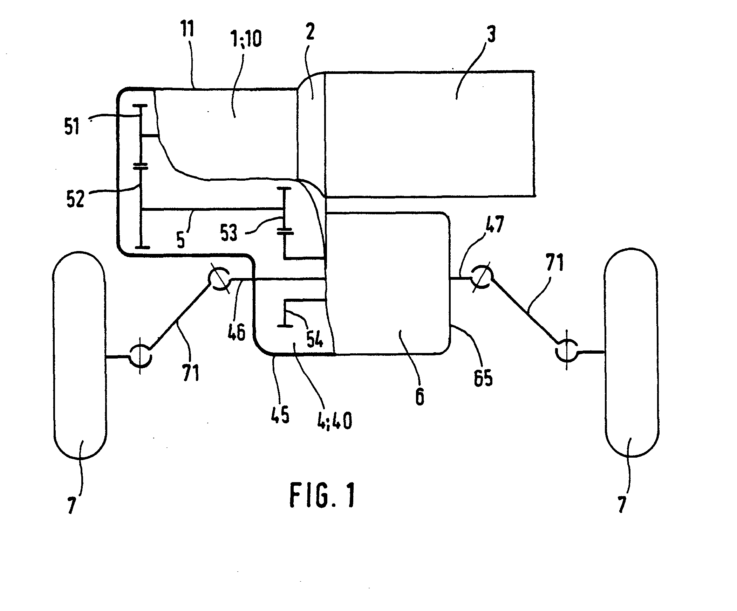

In Fig. 1 ist mit 1 das Gangwechselgetriebe, mit 2 ein hydrodynamischer Drehmomentwandler und mit 3 der Antriebsmotor bezeichnet. Über die Stirnräder 51, 52, die Seitenwelle 5 und die Stirnräder 53 und 54 erfolgt die triebliche Verbindung zum Achsgetriebe 4. Mit diesem ist das parallel zum Antriebsmotor 3 angeordnete Teilgetriebe 6 verbunden. Vom Achsgetriebe 4 aus werden die Antriebsräder 7 über die Antriebswellen 71 angetrieben. Mit 11 ist das Gehäuse für das Gangwechselgetriebe, mit 45 das Gehäuse des Achsgetriebes und mit 65 das Gehäuse des Teilgetriebes dargestellt.

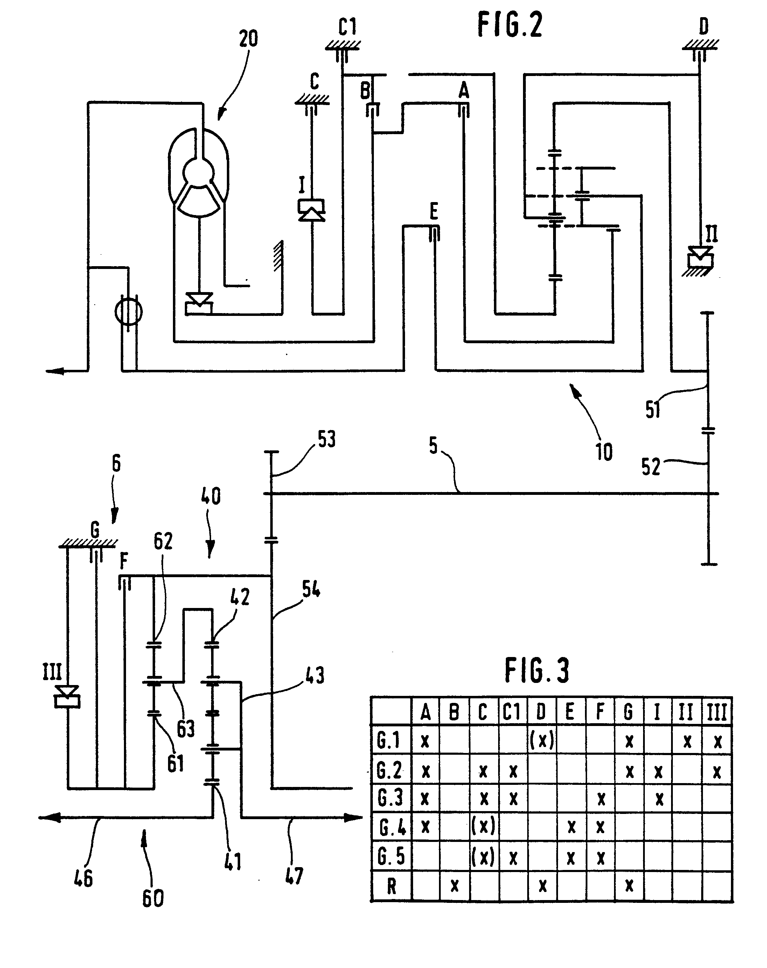

In der schematischen trieblichen Anordnung der Zahnräder und Wellen nach Fig. 2 ist mit 10 ein an sich bekanntes Viergang Automatgetriebe dargestellt, das komplettiert mit einem hydrodynamischen Drehmomentwandler 20 bekannt ist. Die Seitenwelle 5 mit den Stirnradsätzen 51, 52 und 53, 54 dient zum Antrieb eines Planetendifferentiales, z. B. bei quergestelltem Antriebsmotor in einem frontgetriebenen Fahrzeug. Mit dem Stirnrad 54 ist das Hohlrad 62 eines einfachen Planetenradsatzes 60 und eine Schaltkupplung F des Teilgetriebes 6 verbunden. Das Sonnenrad 61 hat eine feste Verbindung mit dem Freilauf III, der am Gehäuse abgestützt ist sowie mit einer Bremse G und zusätzlich noch mit dem anderen Reibelement der Kupplung F. Der Steg 63 des einfachen Planetenradsatzes 60 vom Teilgetriebe 6 ist mit dem Hohlrad 42 des Planetendifferentials 40 verbunden und der Abtrieb erfolgt einmal über die Sonne 41 zur Abtriebswelle 46 und zum anderen über den Steg 43 der zwei miteinander im Eingriff stehenden Planeten zur Abtriebswelle 47, wobei die Abtriebswellen 46 und 47 mit den Antriebswellen 71 (Fig. 1) für die Antriebsräder 7 gelenkig verbunden sind. Mit dieser Koppelung des Stirnrades 54 mit dem einfachen Planetenradsatz 60 und dem Achsdifferential 40 wird das viergängige Hauptgetriebe zu einem Fünfgang-Getriebe mit drei Gängen ins Langsame, einem direkten Gang und einem Gang ins Schnelle erweitert. Die Fig. 3 zeigt in übersichtlicher Weise die in den einzelnen Gängen geschlossenen Kupplungen, Bremsen und wirksamen Freiläufe.

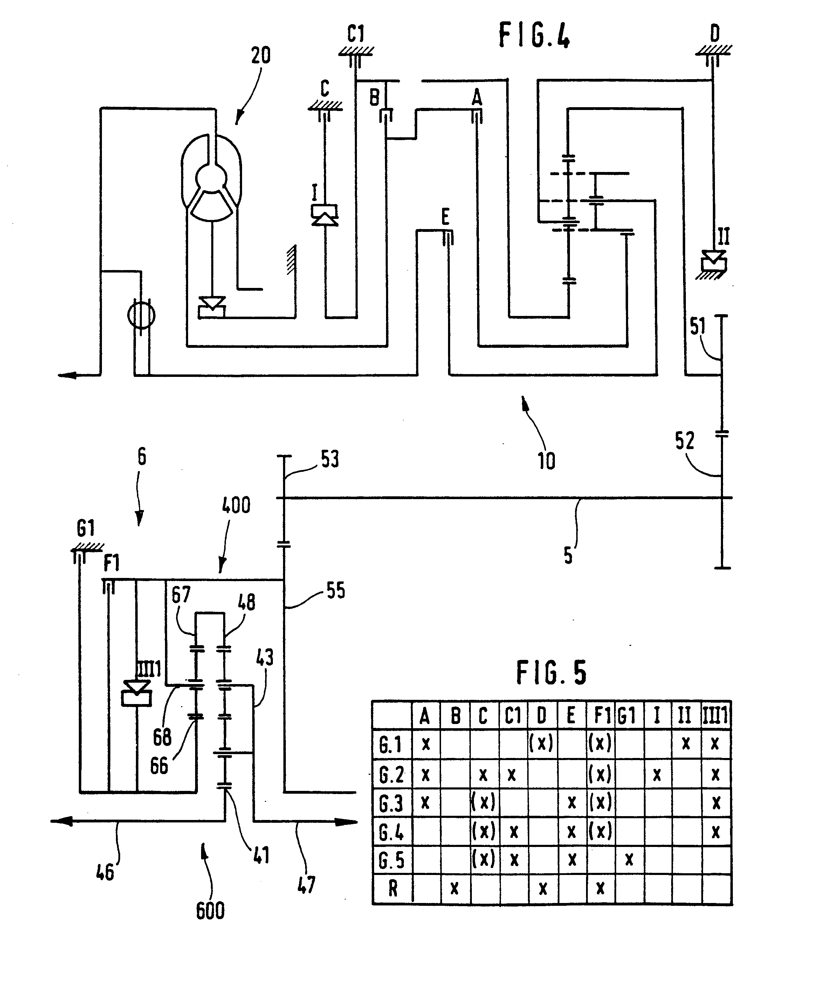

Das in Fig. 4 dargestellte Getriebeschema ist im Prinzip dem der Fig. 2 gleich, nur das Stirnrad 55 des zweiten Stirnradsatzes 53/55 ist mit dem Steg 68 des einfachen Planetenradsatzes, einem Freilauf III1 und der Kupplung F1 verbunden. Das Sonnenrad 66 dieses einfachen Planetenradsatzes 600 hat eine triebliche Verbindung mit dem Freilauf III1, mit der Kupplung F1 und mit der Bremse G1. Der Abtrieb vom Teilgetriebe 6 auf das Planetendifferential erfolgt über das Hohlrad 67 zum Hohlrad 48, wobei diese beiden Hohlräder einteilig ausgeführt sein können. Mit dieser von der Fig. 2 abweichenden trieblichen Verbindung zwischen dem Stirnrad 55, dem einfachen Planetenradsatz 600 und dem Achsdifferential 400 werden zwei Gänge ins Lansame, ein direkter Gang und zwei Schnellgänge erzielt. Die Fig. 5 zeigt wieder, wie schon in Fig. 3 beschrieben, die geschlossenen Kupplungen und Bremsen sowie die wirksamen Freiläufe in den einzelnen Gängen, jedoch nach Fig. 4.

Anstelle des dargestellten Viergang-Getriebes 10 in Fig. 2 und Fig. 4 können selbstverständlich auch alle anderen bekannten und möglichen Drei- und Viergang-Getriebe als Hauptgetriebe 10 zum Einsatz gelangen, wobei mit dem Teilgetriebe 6 jeweils ein Gang mehr gewonnen wird.

Bezugszeichen

1 Gangwechselgetriebe
10 Hauptgetriebe
11 Getriebegehäuse gesamt
2 Hydraulische Einheit
20 Hydraulischer Drehmomentwandler
3 Antriebsmotor
4 Achsgetriebe (Differential)
40, 400 Planetendifferential
41 Sonnenrad
42 Hohlrad
43 Doppelsteg
45 Gehäuse
46 Abtriebswelle
47 Abtriebswelle
48 Hohlrad
5 Seitenwelle
51 Stirnrad
52 Stirnrad
53 Stirnrad
54 Stirnrad
55 Stirnrad
6 Teilgetriebe
60, 600 Einfacher Planetenradsatz
61 Sonnenrad
62 Hohlrad
63 Steg
65 Teilgehäuse
66 Sonnenrad
67 Hohlrad
68 Steg
7 Antriebsräder
71 Antriebswellen
F, F1 Kupplung
G, G1 Bremse
III, III1 Freilauf

**Patentansprüche**

1. Umlaufrädergetriebe für ein Kraftfahrzeug, wobei der Antriebsmotor (3) quer zur Fahrtrichtung angeordnet und das Gangwechselgetriebe (1) koaxial angeflanscht ist, mit einem
— auf einer ersten Achse angeordneten, selbsttätig schaltenden Teilgetriebe (1, 10), das direkt oder über eine hydrodynamische Einheit (2) z. B. einen hydrodynamischen Drehmomentwandler mit dem Antriebsmotor (3) verbunden ist,
— einer zweiten Achse mit einer Seitenwelle (5) und zwei Stirnrädern (52, 53) und
— einer dritten Achse (Antriebswellen 46, 47), auf der das Achsgetriebe (4) angeordnet ist,
und mit einem zur Gewinnung von mindestens einem weiteren Gang angeordneten, weiteren selbsttätig schaltenden Teilgetriebe dadurch gekennzeichnet, daß dieses Teilgetriebe (6) auf der dritten Achse (Antriebswellen 46, 47) angeordnet und koaxial mit dem Achsgetriebe (4) verbunden ist.

2. Getriebe nach Anspruch 1, dadurch gekennzeichnet, daß ein einfacher Planetenradsatz (60) als Teilgetriebe (6) und ein Planetendifferential (40) als Achsgetriebe (4) angeordnet ist.

3. Getriebe nach Anspruch 2, dadurch gekennzeichnet, daß das Achsgetriebe (4), das Teilgetriebe (6), die hydrodynamische Einheit (2) und das Gangwechselgetriebe (1) in einem gemeinsamen Getriebegehäuse (10/45/65) angeordnet sind.

4. Getriebe nach Anspruch 2, dadurch gekennzeichnet, daß das Achsgetriebe (4) und das Teilgetriebe (6) in einem gemeinsamen Gehäuse (45/65), das an das Hauptgetriebe (10) angeflanscht, angeordnet ist.

5. Getriebe nach Anspruch 2, dadurch gekennzeichnet, daß das Teilgetriebe (6) in einem Teilgehäuse (65), das an das Getriebegehäuse (10/45) mit der hydraulischen Einheit (2), dem Hauptgetriebe (10) und der Seitenwelle (5) angeflanscht, angeordnet ist.

6. Getriebe nach Anspruch 2, dadurch gekennzeichnet, daß im Hauptgetriebegehäuse (11) ein Viergang-Automatgetriebe (10) angeordnet ist und daß im Teilgetriebe (6) zur Erzielung eines weiteren Ganges das von der Seitenwelle (5) angetriebene Stirnrad (54) mit dem Hohlrad (62) des einfachen Planetenradsatzes (60) und einer Kupplung (F), das Sonnenrad (61) mit dieser Kupplung (F) und einer Bremse (G) sowie mit einem Freilauf (III), der sich am Gehäuse abstützt, und der Planetenträger (63) mit dem Hohlrad (42) des Planetendifferentiales (40) verbunden ist und die beiden Abtriebswellen (46, 47) zu den Antriebsrädern (7) über das Sonnenrad (41) und den Steg (43) der zwei miteinander in Eingriff stehenden Planeten des Planetendifferentiales (40) verbunden sind und damit neben dem R-Gang insgesamt drei Gänge ins Langsame, ein direkter Gang und ein Schnellgang gewonnen werden.

7. Getriebe nach Anspruch 2, dadurch gekennzeichnet, daß als Hauptgetriebe ein Viergang-Automatgetriebe (10) angeordnet ist und daß im Teilgetriebe (6) zur Erzielung eines weiteren Ganges das Stirnrad (55) mit dem Steg (68) des einfachen Planetenradsatzes (600) mit einer Kupplung (F1) und mit einem Freilauf (III1) und daß dessen Sonnenrad (66) mit dieser Kupplung (F1) und diesem Freilauf (III1) und noch mit einer Bremse (G1), das Hohlrad (67) mit dem Hohlrad (48) des Planetendifferentiales (400) verbunden ist und die beiden Abtriebswellen (46/47) zu den Antriebsrädern (7) über das Sonnenrad (41) und den Steg (43) der zwei miteinander in Eingriff stehenden Planeten des Planetendifferentiales (400) verbunden sind und damit neben dem R-Gang insgesamt zwei Gänge ins Langsame, ein direkter Gang und zwei Gänge ins Schnelle gewonnen werden.

8. Getriebe nach Anspruch 7, dadurch gekennzeichnet, daß die Hohlräder (67, 48) des einfachen Planetenradsatzes (600) und des Planetendifferentiales (400) einteilig ausgebildet sind.

## Claims

1. A planet gear system for a motor vehicle, wherein the drive motor (3) is disposed transversely in relation to the direction of travel and the speed-change gear (1) is coaxially flanged, comprising

— an automatically-switched auxiliary gearbox (1, 10) disposed on a first axle, said auxiliary gearbox being connected to the drive motor (3), either directly or via a hydrodynamic unit, e. g. a hydrodynamic torque convertor,

— a second axle having a lateral shaft (5) and two spur gears (52, 53) and

— a third axle (drive shafts 46, 47) on which the axial gearbox (4) is disposed,

and comprising a further automatically-switched auxiliary gearbox in order to obtain at least one further gearspeed, characterised in that this auxiliary gearbox (6) is disposed on the third axle (drive shafts 46, 47) and is coaxially connected with the axial gearbox (4).

2. Gearbox according to claim 1, characterised in that a simple planet gear set (60) is disposed as an auxiliary gearbox (6) and a planet differential (40) as an axial gearbox (4).

3. Gearbox according to claim 2, characterised in that the axial gearbox (4), the auxiliary gearbox (6), the hydrodynamic unit (2) and the speed-change gear (1) are disposed in a common gearbox housing (10/45/65).

4. Gearbox according to claim 2, characterised in that the axial gearbox (4) and the auxiliary gearbox (6) are disposed in a common housing (45/65) which is flanged on to the main gearbox (10).

5. Gearbox according to claim 2, characterised in that the auxiliary gearbox (6) is disposed in a separate housing (65) which is flanged on to the gearbox housing (10/45) comprising the hydraulic unit (2), the main gearbox (10) and the lateral shaft (5).

6. Gearbox according to claim 2, characterised in that a four-speed automatic gearbox (10) is disposed in the main gearbox housing (11) and that in the auxiliary gearbox (6), in order to obtain a further gearspeed, the spur gear (54) driven by the lateral shaft (5) is connected with the ring gear (62) of the simple planet gear set (60) and a clutch (F), the sun gear (61) is connected with this clutch (F) and a brake (G), as well as with a freewheel (III) which is supported at the housing, and the planet carrier (63) is connected with the ring gear (42) of the planet differential (40), and the two drive shafts (46, 47) are connected to the drive gears (7) via the sun gear (41) and the shaft (43) of the two meshing planet gears of the planet differential (40) and in this way as well as the reverse gear, 3 low speed gears altogether, one direct gear and one high speed gear are obtained.

7. Gearbox according to claim 2, characterised in that a four-speed automatic gearbox (10) is disposed as the main gearbox and that in the auxiliary gearbox (6), in order to obtain a further gearspeed, the spur gear (55) is connected with the shaft (68) of the simple planet gear set (600), with a clutch (F1) and with a freewheel (III1) and that its sun gear (66) is connected with this clutch (F1) and this freewheel (III1) and also with a brake (G1), and the ring gear (67) is connected with the ring gear (48) of the planet differential (400), and the two drive shafts (46/47) are connected to the drive gears (7) via the sun gear (41) and the shaft (43) of the two meshing planet gears of the planet differential (400), and in this way as well as the reverse gear two low speed gears altogether, one direct gear and two high speed gears are obtained.

8. Gearbox according to claim 7, characterised in that the ring gears (67, 48) of the simple planet gear set (600) and the planet differential (400) are formed in one piece.

## Revendications

1. Transmission planétaire pour un véhicule à moteur dont le moteur de traction (3) est disposé en travers de la direction de marche et dont la boîte de vitesses (1) est bridée coaxialement à celui-ci, comportant :
— une boîte de vitesses partielle (1, 10) à commutation automatique, disposée sur un premier axe, cette boîte étant couplée au moteur de traction (3) directement ou par une unité hydrodynamique (2), par exemple un convertisseur hydrodynamique de couple,
— un deuxième axe pourvu d'un arbre latéral (5) et de deux pignons droits (52, 53), et
— un troisième axe (arbres 46, 47) sur lequel est disposée la boîte de pont (4),
et comportant, pour gagner au moins une vitesse supplémentaire, une autre boîte de vitesses partielle à commutation automatique, caractérisée en ce que cette autre boîte de vitesses partielle (6) est disposée sur le troisième axe (arbres 46, 47) et est reliée coaxialement à la boîte de pont (4).

2. Transmission selon la revendication 1, caractérisée en ce qu'elle comporte un train planétaire simple (60) en guise de boîte de vitesses partielle (6), et un différentiel planétaire (40) en guise de boîte de pont (4).

3. Transmission selon la revendication 2, caractérisée en ce que la boîte de pont (4), la boîte de vitesses partielle (6), l'unité hydrodynamique (2) et la boîte de vitesses (1) sont disposées dans un carter de transmission commun (10/45/65).

4. Transmission selon la revendication 2, caractérisée en ce que la boîte de pont (4) et la boîte de vitesses partielle (6) sont disposées dans un carter commun (45, 65) qui est bridé à la boîte principale (10).

5. Transmission selon la revendication 2, caractérisée en ce que la boîte de vitesses partielle (6) est disposée dans un carter partiel (65) qui est bridé au carter de transmission (10/45) contenant l'unité hydrodynamique (2), la boîte principale (10) et l'arbre latéral (5).

6. Transmission selon la revendication 2, caractérisée en ce que le carter de boîte principale (11) contient une boîte de vitesses automatique à quatre rapports (10) et en ce que, pour créer un rapport supplémentaire dans la boîte de vitesses partielle (6), le pignon droit (54) entraîné par l'arbre latéral (5) est couplé à la couronne (62) du train planétaire simple (60) et à un embrayage (F), le pignon planétaire (61) est couplé à cet embrayage (F) et à un frein (G) ainsi qu'à un dispositif de roue libre (III) qui prend appui sur le carter, le porte-satellites (63) est couplé à la couronne (42) du différentiel planétaire (40), et les deux arbres (46, 47) de sortie vers les roues motrices (7) sont couplés par le pignon planétaire (41) du différentiel planétaire (40) et par le flasque (43) portant les deux satellites mutuellement engrenés de ce différentiel, ce qui fournit en tout, outre la marche arrière, trois rapports démultipliés, une prise directe et un rapport surmultiplié.

7. Transmission selon la revendication 2, caractérisée en ce qu'une boîte de vitesses automatique à quatre rapports (10) sert de boîte principale et en ce que, pour créer un rapport supplémentaire dans la boîte de vitesses partielle (6), le pignon droit (55) est couplé au porte-satellites (68) du train planétaire simple (600), à un embrayage (F1) et à un dispositif de roue libre (III 1), le pignon planétaire (66) de ce train simple est couplé à cet embrayage (F1), à ce dispositif de roue libre (III1) et à la couronne (48) du différentiel planétaire (400), et les deux arbres (46/47) de sortie vers les roues motrices (7) sont couplés par le pignon planétaire (41) du différentiel planétaire (400) et par le flasque (43) portant les deux satellites mutuellement engrenés de ce différentiel, ce qui fournit en tout, outre la marche arrière, deux rapports démultipliés, une prise directe et deux rapports surmultipliés.

8. Transmission selon la revendication 7, caractérisée en ce que les couronnes (67, 48) du train planétaire simple (600) et du différentiel planétaire (400) sont formées par une seule pièce.

FIG. 1

1

# FIG.2

# FIG.3

| | A | B | C | C1 | D | E | F | G | I | II | III |
|---|---|---|---|---|---|---|---|---|---|---|---|
| G.1 | x | | | | (x) | | | x | | x | x |
| G.2 | x | | x | x | | | | x | x | | x |
| G.3 | x | | x | x | | | x | | x | | |
| G.4 | x | | (x) | | | x | x | | | | |
| G.5 | | | (x) | x | | x | x | | | | |
| R | | x | | | x | | | x | | | |

2

FIG.4

FIG.5

| | A | B | C | C1 | D | E | F1 | G1 | I | II | III1 |
|---|---|---|---|---|---|---|---|---|---|---|---|
| G.1 | x | | | | (x) | | (x) | | | x | x |
| G.2 | x | | x | x | | | (x) | | x | | x |
| G.3 | x | | (x) | | | x | (x) | | | | x |
| G.4 | | | (x) | x | | x | (x) | | | | x |
| G.5 | | | (x) | x | | x | | x | | | |
| R | | x | | | x | | x | | | | |